# EUROPÄISCHE PATENTSCHRIFT

(11) **EP 0 465 610 B1**
(45) Veröffentlichungstag und Bekanntmachung des Hinweises auf die Patenterteilung: **22.02.1995**
(21) Anmeldenummer: 91900709.6
(22) Anmeldetag: 10.01.1991
(51) Int. Cl.: B60R 21/16, D03D 1/02, D03D 1/04, D03D 3/08

(54) **GASKISSEN, VERFAHREN UND VORRICHTUNG ZU SEINER HERSTELLUNG**
GAS CUSHION, PROCESS AND DEVICE FOR PRODUCING IT
COUSSIN A GAZ, PROCEDE ET DISPOSITIF POUR SA FABRICATION

(30) Priorität: 26.01.1990 CH 263/90
(43) Veröffentlichungstag der Anmeldung: 15.01.1992
(73) Patentinhaber: PILLET, Jean-Francois, 1429 Giez (CH)
(72) Erfinder: PILLET, Jean-Francois, 1429 Giez (CH)
(74) Vertreter: Schmauder, Klaus Dieter
(86) Internationale Anmeldenummer: CH9100008
(87) Internationale Veröffentlichungsnummer: WO9111345

(56) Entgegenhaltungen:
- EP-A- 302 012
- EP-A- 0 314 867
- EP-A- 0 416 483
- WO-A-87/05342
- WO-A-89/05250
- CH-A- 87 032
- FR-A- 2 124 893
- FR-A- 2 135 555

## Beschreibung

Die Erfindung betrifft ein Gaskissen, insbesondere für Sicherheitssysteme von Kraftfahrzeugen, gemäss Oberbegriff des Anspruches 1, sowie ein Verfahren zu dessen Herstellung gemäss Oberbegriff des Anspruches 9 und eine Anlage zur Durchführung des Verfahrens gemäss Oberbegriff des Anspruches 17.

Aus der DE-OS 21 21 793 sind bereits ein Gaskissen sowie ein Verfahren und eine Vorrichtung zu seiner Herstellung bekannt. Das so hergestellte Gaskissen ist relativ flach und insofern für Sicherheitssysteme von Kraftfahrzeugen nicht geeignet. Andererseits ist es bekannt, Gaskissen für Sicherheitssysteme von Kraftfahrzeugen, sogenannte Airbags, herzustellen, die jedoch relativ komplizierte Zuschnitte und Näharbeiten erfordern, um die für solche Airbags erforderliche bauchige Form zu erhalten.

Aus der EP-A-0 314 867 und der EP-A-0 416 483 ist es bekannt ein Gewebe mit übersättigter Gewebeeinstellung, das heisst mit sehr dichter Kett- und Schussfadenzahl herzustellen, das über die ganze Fläche gleiche Eigenschaften aufweist. Die Verdichtung des Gewebes kann durch einheitliches thermisches Schrumpfen über die ganze Fläche erhöht werden. Aus einem solchen Gewebe kann durch herkömmliches Konfektionieren, wie Zuschneiden und Zusammennähen ein Gaskissen (Airbag) hergestellt werden. Die Herstellung eines Gaskissens im Zuge der Herstellung des Gewebes ist diesen Druckschriften nicht zu entnehmen.

Aufgabe der Erfindung ist es, ein Gaskissen so auszubilden, dass es auf einfache Weise und ohne komplizierte Zuschnitte und Näharbeiten hergestellt werden kann sowie ein entsprechendes Verfahren und eine Vorrichtung zu dessen Herstellung anzugeben.

Die erfindungsgemässe Aufgabe wird gelöst durch
a) durch das Gaskissen gemäss Anspruch 1;
b) das Verfahren zur Herstellung des Gaskissens gemäss Anspruch 9; und
c) eine Anlage zur Durchführung des Verfahrens gemäss Anspruch 17.

Vorteilhafte Ausgestaltungen des Gaskissens sind in den Ansprüchen 2 bis 8, des Verfahrens in den Ansprüchen 10 bis 16 und der Anlage in den Ansprüchen 18 bis 21 beschrieben.

Dadurch, dass bei einem Gaskissen, dessen Gewebezuschnitte längs ihres Umfanges durch gegenseitiges Verweben von Nahtstreifen miteinander verbunden sind und die Seitenbereiche, welche in mindestens einer Fadenrichtung liegen, geschrumpft sind, erhält ein solches Gaskissen eine bauchige, voluminöse Form, ohne dass zusätzliche Näharbeiten erforderlich sind. Obwohl das Schrumpfen in Kettrichtung bevorzugt ist, ist auch ein ausschliessliches oder zusätzliches Schrumpfen in Schussrichtung möglich. Das Zusammenweben der Gewebebahnen und das Schrumpfen der Seitenbereiche kann in einem Arbeitsablauf erfolgen, wodurch sich nicht nur ein bauchiges Gaskissen herstellen lässt, das als Airbag für Sicherheitssysteme von Kraftfahrzeugen geeignet ist, sondern das auch in einem einzigen Arbeitsgang praktisch ohne zusätzliche Bearbeitungen einfach, schnell und preiswert herstellbar ist. Das Gaskissen kann dabei rechteckig oder kreisrund oder jede beliebige Form aufweisen.

Besonders zweckmässig ist es, wenn das Gaskissen nach Anspruch 2 ausgestaltet ist, wodurch sich der Uebergang vom Seitenbereich zum Mittelbereich kontinuierlicher gestalten lässt. Zweckmässig ist auch eine Ausgestaltung nach Anspruch 3, wodurch sich im mittleren Bereich des Gaskissens eine Einbuchtung erzielen lässt, die gerade für Airbags besonders erwünscht ist, um im Bedarfsfall einer in einem Kraftfahrzeug zu sichernden Person einen verbesserten seitlichen Halt zu geben. Eine solche Profilierung des Gaskissens lässt sich durch eine Ausbildung nach Anspruch 4 verbessern. Auch die Ausgestaltung nach Anspruch 5 ermöglicht eine weitere Profilierung des Gaskissens, wenn die geschrumpften Seitenbereiche hierzu nicht ausreichend sein sollten.

Besonders zweckmäßig ist auch eine Ausgestaltung des Gaskissens nach Anspruch 6, da die abschnittweise Schrumpfung an den verwebten Nahtstreifen insbesondere, wenn sie dort locker gewebt sind, einerseits eine grosse Festigkeit und andererseits grosse Dichtheit der Nahtstreifen ergibt.

Besonders vorteilhaft ist eine Ausgestaltung des Gaskissens nach Anspruch 7, da der obere, dichtere Gewebezuschnitt im Bedarfsfall eine zu sichernde Person sicher hält, jedoch die lockerere Bindung des unteren Gewebezuschnittes eine gewisse Ventilation des Gases nach aussen zulässt, sodass insbesondere beim plötzlichen Aufblasen des Gaskissens der entstehende Schlag gebremst wird und die Haltewirkung des Gaskissens durch Austreten des Gases am unteren Gewebezuschnitt allmählich nachlässt. Dies ist erwünscht, da die maximale Haltekraft eines Gaskissens in einem Sicherheitssystem eines Kraftfahrzeuges nur für den Augenblick des Unfalles des Kraftfahrzeuges nötig wird, anschliessend jedoch die Haltekraft wieder nachlassen soll, damit die geschützte Person sich wieder befreien oder befreit werden kann.

Besonders vorteilhaft ist auch eine Ausgestaltung des Gaskissens nach Anspruch 8, wodurch nicht nur ein Ausschneiden des Gaskissens aus einer Gewebebahn erleichtert wird, sondern gleichzeitig auch die Fäden des Gewebes des Gaskissens gegen Ausriffeln gesichert sind.

Das Verfahren und die Vorrichtung zur Herstellung des Gaskissens sind nicht nur besonders einfach, sondern gestatten, wie bereits oben erwähnt, eine sehr einfache und kostengünstige Herstellung des Gaskissens. Es ist lediglich erforderlich, die Webart und/oder das Material der Fäden so zu gestalten, dass Abschnitte der Seitennahtstreifen der miteinander verwebten Gewebebahnen schrumpfen können. Das Schrumpfen selbst erfolgt dann auf einfachste Weise durch Wärmeeinwirkung, worauf der kissenförmige Abschnitt nur längs seines gewebten Nahtstreifens aus der Warenbahn auszuschneiden ist.

Durch eine Ausgestaltung des Verfahrens nach Anspruch 10 lässt sich ein Gaskissen weiter profilieren.

Besonders vorteilhaft ist eine Ausgestaltung des Verfahrens nach Anspruch 11, da die Gewebebahnen aus Fäden aus thermoplastischen synthetischen Materialien nicht nur das Schrumpfen begünstigen sondern auch ein späteres Ausschneiden des kissenförmigen Abschnittes durch Schmelzschneiden. Dadurch werden überdies die Nahtstreifen gesichert. Die Schrumpfeigenschaften der Gewebebahnen lassen sich durch eine Ausgestaltung des Verfahrens nach Anspruch 12 variieren, wobei lockerer gewebte Abschnitte stärker schrumpfen als dicht gewebte Abschnitte.

Das Schrumpfen der Gewebebahnen lässt sich am einfachsten durch eine Ausgestaltung nach Anspruch 13 erzielen, da die profilierte temperierte Walze gleichzeitig zur Steuerung der Schrumpfung beiträgt. Aber auch eine Ausgestaltung des Verfahrens nach Anspruch 14 ermöglicht insbesondere ein zusätzliches Schrumpfen der Gewebebahnen, wobei auch das Schrumpfen in Schussrichtung möglich ist.

Vorteilhafte Gaskissen ergeben sich durch eine Verfahrensweise nach Anspruch 15, sodass die obere Gewebebahn besonders dicht ist und die untere Gewebebahn eine gewisse Gasdurchlässigkeit gestattet.

Eine Ausgestaltung des Verfahrens nach Anspruch 16 ermöglicht eine weitergehende Profilierung und Stabilisierung des Gaskissens.

Die zur Durchführung des Herstellungsverfahrens des Gaskissens geeignete Anlage weist eine Webmaschine auf, sowie eine nachgeschaltete Einrichtung zum bereichsweisen Schrumpfen der Gewebebahnen.

Besonders vorteilhaft ist eine Ausgestaltung der Anlage nach Anspruch 18, wobei die profilierte temperierte Walze den Schrumpfungsvorgang besonders gut steuert. Das Schrumpfen lässt sich aber auch mit einer Ausgestaltung der Anlage nach Anspruch 19 oder in Verbindung mit einer profilierten temperierte Walze erzielen.

Die hergestellte Warenbahn kann zweckmässigerweise gemäss Ausgestaltung der Anlage nach Anspruch 20 aufgewickelt werden oder beispielsweise mittels einer Anlage nach Anspruch 21 direkt durch Ausschneiden entlang des Nahtstreifens in einzelne Gaskissen getrennt werden.

Ausführungsbeispiele des Gegenstandes der Erfindung werden nachfolgend anhand der Zeichnungen näher beschrieben, dabei zeigen:
- Figur 1: ein als Airbag für Sicherheitssysteme von Kraftfahrzeugen dienendes Gaskissen in Ansicht auf die Breitseite;
- Figur 2: das Gaskissen der Figur 1 in Draufsicht;
- Figur 3: ein weiteres Gaskissen in Draufsicht;
- Figur 4: eine in einer Textilmaschine hergestellte Warenbahn mit einem kissenförmigen Abschnitt;
- Figur 5: eine temperierte Walze zum schrumpfen der Warenbahn nach Figur 4;
- Figur 6: eine Anlage mit einer temperierten Walze zur Herstellung einer Warenbahn mit Gaskissenabschnitten in schematischer Darstellung;
- Figur 7: eine weitere Anlage mit einer Infrarotstation in schematischer Darstellung;
- Figur 8: eine weitere Anlage mit Heissluftdüsen in schematischer Darstellung.
- Figur 9: eine erste Vorrichtung zum Schmelzschneiden in Ansicht auf die Längsseite; und
- Figur 10: eine zweite Vorrichtung zum Schmelzschneiden in Ansicht auf die Längsseite.

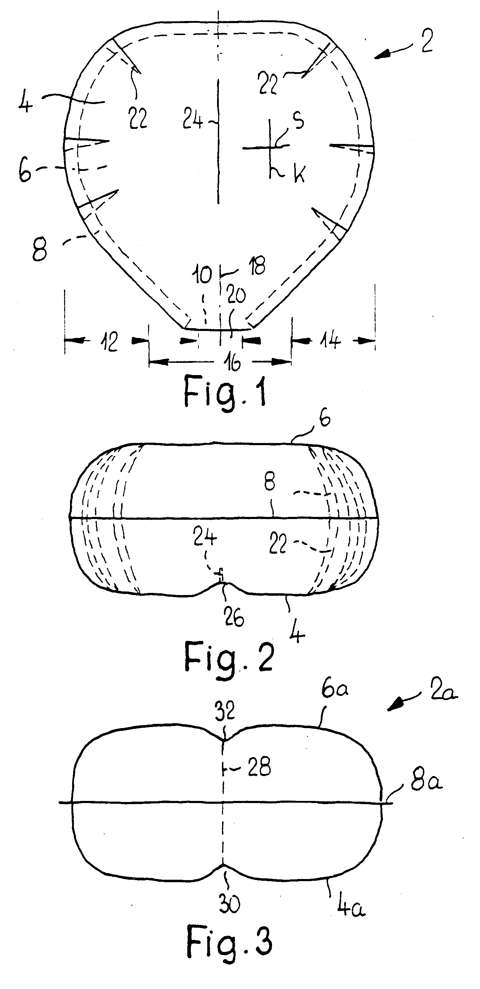

Die Figuren 1 und 2 zeigen ein Gaskissen 2, das als sogenannter Airbag in Sicherheitssystemen für Kraftfahrzeuge zum Einsatz kommen kann. Das Gaskissen enthält einen oberen Gewebezuschnitt 4 und einen unteren Gewebezuschnitt 6, die längs eines innenliegenden Nahtstreifens 8 durch Verweben miteinander verbunden sind. Am unteren Ende ist der Nahtstreifen zur Bildung einer Oeffnung 10 unterbrochen. Die Oeffnung 10 dient zum Einsatz einer nicht näher dargestellten Luftzufuhr. Das Gaskissen enthält in Längsrichtung der Kettfäden K orientierte Seitenbereiche 12 und 14, in denen das Gewebe geschrumpft ist. Die Schrumpfung nimmt gegen den Mittelbereich 16 ab. Im Mittelbereich 16 ist zumindest am oberen Gewebezuschnitt 4 parallel zur Mittelachse 18 ein weiterer geschrumpfter Bereich 20 vorhanden. Die geschrumpften Seitenbereiche 12,14 verleihen dem Gaskissen eine bauchige Form. Diese Formgebung kann durch Abnäher 22 weiter unterstützt werden. Der längs der Mittelachse 18 vorgesehene geschrumpfte Bereich 20, der ebenfalls durch einen Abnäher 24 verstärkt werden kann, verleiht dem Gaskissen eine Einbuchtung 26, die dazu dient, im Bedarfsfall eine zu schützende Person im mittleren Bereich des Gaskissens zu halten, d.h. ein seitliches Abgleiten zu verhindern.

Das Gaskissen bzw. die Gewebezuschnitte sind aus Fäden aus thermoplastischem Material hergestellt, die das Schrumpfen bestimmter Bereiche und das thermische Schmelzschneiden an dem Nahtstreifen ermöglichen. An dem Nahtstreifen 8 ist vorzugsweise eine 1:1-Bindung vorgesehen. Die Bereiche 12,14,20, die schrumpfen sollen, enthalten eine lockerere Bindung, die beispielsweise vom äusseren Rand nahe des Nahtstreifens beispielsweise von einer 4:4-Bindung bis zu einer 1:1-Bindung im Mittelbereich variieren kann. Um die in jedem Gewebezuschnitt geforderte 1:1 Bindung zu verwirklichen, ist eine Bindungspatrone 1/3/3/1 erforderlich, d.h. bei 1/3 sind 3/4 der Schäfte und damit der Kettfäden unten und der Schusseintrag erfolgt im oberen Gewebe. Bei 3/1 sind 3/4 der Schäfte und damit der Kettfäden oben und der Schusseintrag erfolgt unten. Es ist auch möglich, den oberen Gewebezuschnitt dichter und den unteren Gewebezuschnitt lockerer auszustatten. Letzteres wird beispielsweise dadurch erreicht, dass der untere Gewebezuschnitt ausschliesslich oder nur in abwechselnder Reihenfolge dünnere Schussfäden als der obere Gewebezuschnitt aufweist und/oder dass jeder x-te Schussfaden ausgelassen ist. Dadurch ist der obere d.h. vordere Gewebezuschnitt dichter als der untere d.h. rückwärtige Gewebezuschnitt, wodurch beim plötzlichen Aufblasen des Gaskissens der Aufprall auf eine Person gemildert und ein Gas- oder Partikeldurchtritt verhindert wird. Da bei Sicherheitssystemen das Gaskissen nur während des Aufpralls eines Kraftfahrzeuges wirksam sein soll und dann seine Wirkung nachlassen kann, ist die lockerere Bindung am unteren Gewebezuschnitt von Vorteil, denn sie ermöglicht das allmähliche Ausströmen der Luft aus dem Gaskissen und damit das Entlasten der gesicherten Person von dem Gaskissen.

Die Figur 3 zeigt ein weiteres Gaskissen 2a, das jenem der Figuren 1 und 2 entspricht, sodass auf die obigen Ausführungen verwiesen wird. Bei dem Gaskissen 2a liegen jedoch die Nahtstreifen 8a auf der Aussenseite und damit so, wie das Gaskissen hergestellt wird, wie weiter unten noch ausführlich beschrieben wird. Der obere Gewebezuschnitt 4a enthält einen eingewebten stärkeren Stützfaden 28, der mit dem unteren Gewebezuschnitt 6a flottierend verbunden ist und zwar derart, dass im aufgeblasenen Zustand die Einschnürung 30,32 auf beiden Seiten des Gaskissens 2a an den Gewebezuschnitten 4a,6a gebildet ist, welche der Einbuchtung 26 des Gaskissens 2 der Figuren 1 und 2 entspricht. Solche zusätzlichen stärkeren Stützfäden 28 verbessern auch die Stabilität des aufgeblasenen Gaskissens 2a.

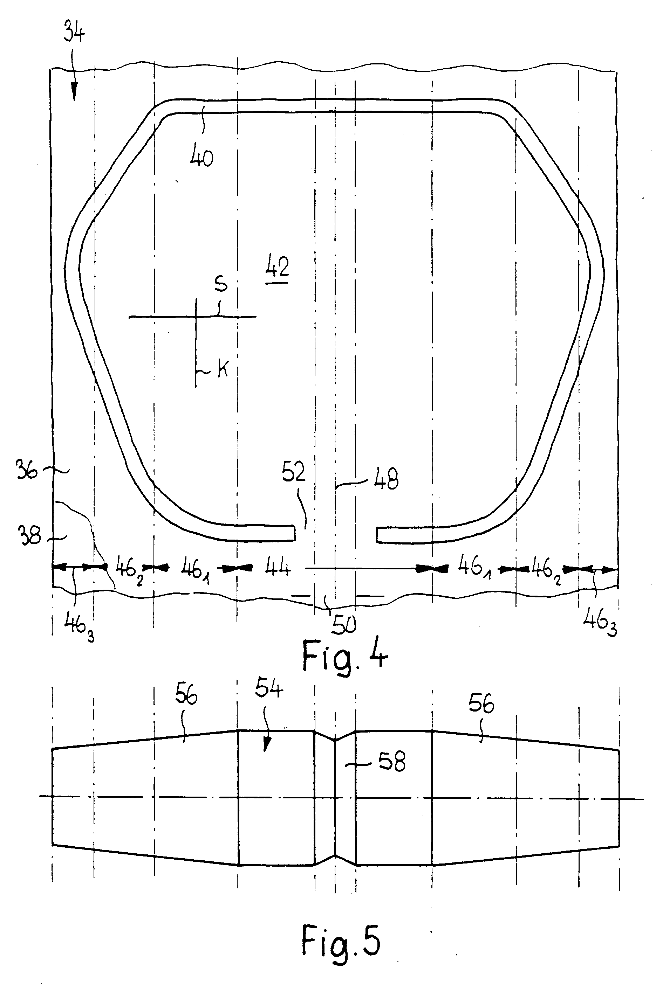

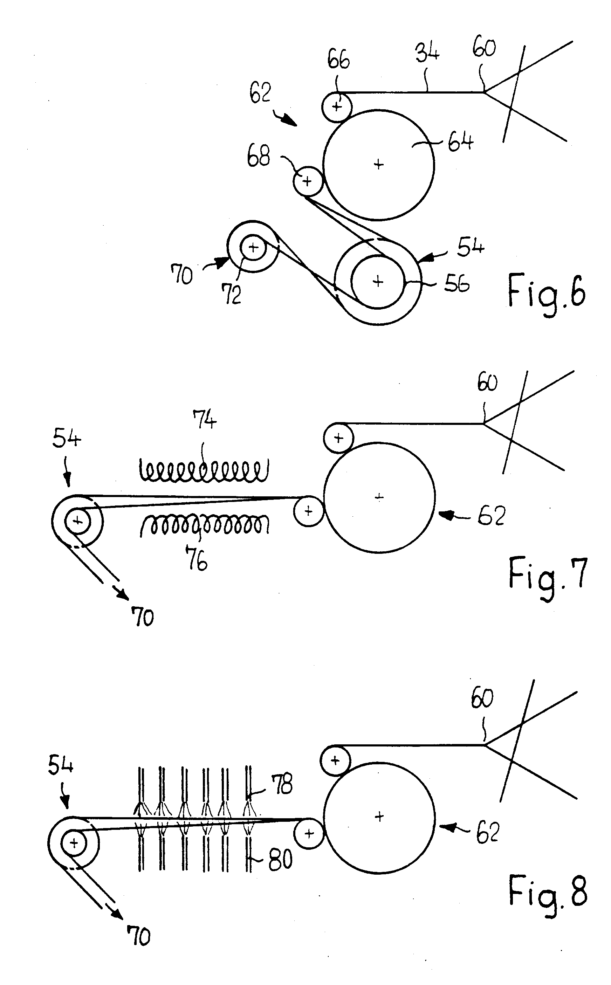

Die Figuren 4 und 5 verdeutlichen das Verfahren zur Herstellung der Gaskissen 2 und 2a. Insbesondere die Figur 4 zeigt eine Warenbahn 34, die aus der Webstelle einer in Figur 6 dargestellten Webmaschine kommt und aus der oberen Gewebebahn 36 und der unteren Gewebebahn 38 gebildet ist. Die Gewebebahnen 36,38 sind jeweils in bekannter Weise aus Kettfäden K und Schussfäden S gebildet. An dem Nahtstreifen 40 sind die obere Gewebebahn 36 und die untere Gewebebahn 38 miteinander verwebt, sodass in der Warenbahn 34 ein kissenförmiger Abschnitt 42 gebildet ist. Die Materialzusammensetzung der Fäden und/oder die Bindungen der Warenbahn sind so gewählt, dass über die Warenbahn insbesondere quer zur Längsrichtung ein unterschiedliches Schrumpfverhalten resultiert. An einen Mittelbereich 44 schliessen sich nach beiden Seiten Bereiche 46₁,46₂,46₃ mit zunehmenden Schrumpfeigenschaften an, wobei die Schrumpfeigenschaften am äussersten Bereich 46₃ am grössten sind. Längs der Mittelachse 48 der Warenbahn ist nochmals ein schmaler Bereich 50 mit verstärkten Schrumpfeigenschaften vorhanden. Dort wo die Gewebebahn nicht schrumpfen soll, d.h. im Mittelbereich 44 ist zweckmässigerweise eine 1:1-Bindung des Gewebes vorgesehen. Die Seitenbereiche 46₁,46₂,46₃ und der Bereich 50 an der Mittelachse 48 weisen hingegen eine lockere Bindung auf, die beispielsweise von der 2:2-Bindung im Anschluss an den Mittelbereich 44 bis zu einer 4:4-Bindung oder mehr am äusseren Bereich reichen kann. Der Nahtstreifen 40 ist überdies mit einer Aussparung 52 versehen, an der die Gewebebahnen 36,38 nicht miteinander verbunden sind und die zum Ansetzen eines Ventils oder einer Gaszuführung dient. Die so hergestellte Warenbahn 34 wird nach dem Warenabzug der Webmaschine über eine temperierte Walze 54 geführt, die an den zu schrumpfenden Bereichen reduzierte Querschnitte aufweist, die vorzugsweise durch konische Abschnitte 56,58 gebildet sind. Durch Ueberführen der Warenbahn an der temperierte Walze 54 schrumpft das Gewebe an den entsprechenden Bereichen 46₁,46₂,46₃ sowie 50. Die geschrumpfte Warenbahn kann dann sofort weiterverarbeitet werden oder auf einem in Figur 6 dargestellten Warenbaum aufgewickelt werden. Der Warenbaum ist vorzugsweise ebenfalls mit Abschnitten reduzierten Querschnitts versehen analog der temperierte Walze 54.

Aus der so hergestellten Warenbahn werden dann die kissenförmigen Abschnitte 42 längs der Nahtstreifen 40 durch thermisches Schmelzschneiden ausgeschnitten, gegebenenfalls an den geschrumpften Bereichen noch zusätzlich mit Abnähern versehen. Der kissenförmige Abschnitt 42 kann dann direkt das Gaskissen 2a gemäss Figur 3 oder nach Wenden das Gaskissen 2 gemäss den Figuren 1 und 2 bilden.

Die Figur 6 zeigt in schematischer Darstellung und in Seitenansicht eine Anlage mit einer herkömmlichen Webmaschine zur Herstellung des Gaskissens. Die in der Figur 4 gezeigte Warenbahn wird an der Webstelle 60 gewoben. Um ein möglichst dichtes Gewebe zu erhalten, ist der Webstelle 60 ein nicht dargestellter Klemmstabbreithalter oder ein Warenniederhalter gemäss der WO 89/08734 zugeordnet. Letztere können im mittleren Bereich temperiert sein, um die Warenbahn an jenen Bereichen, d.h. dem mittleren Bereich, der ansich nicht schrumpfen soll, vorzubehandeln, um latente Spannungen zu beseitigen. Die Warenbahn wird mittels einer Abzugsvorrichtung 62, bestehend aus der Abzugswalze 64, einer vorgeschalteten Umlenkwalze 66 und einer nachgeschalteten Abnahmewalze 68, der temperierte Walze 54 zugeführt wird, welche die konischen Abschnitte 56,58 aufweist. Danach wird die geschrumpfte Warenbahn auf einem Warenbaum 70 aufgewickelt, der ebenfalls entsprechend der temperierte Walze 54 mit konischen Abschnitten 72 versehen ist.

Die Figuren 7 und 8 zeigen zwei weitere Varianten einer solchen Anlage, wobei die temperierte Walze 54 gemäss Figur 7 durch Infrarotstrahler 74,76 und gemäss Figur 8 durch Heiss-luftdüsen 78,80 ergänzt ist.

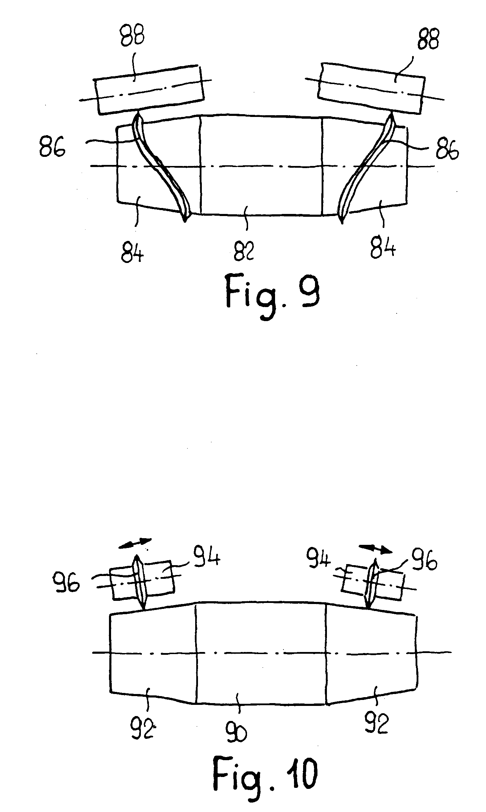

Die Figuren 9 und 10 zeigen eine Vorrichtung zum Schmelzschneiden der beispielsweise nach den Figuren 4 bis 8 hergestellten Warenbahn, wobei das Schmelzschneiden unmittelbar nach dem Schrumpfen im Zuge der Herstellung der Warenbahn erfolgen kann oder nach Zwischenlagerung derselben. Die Vorrichtung der Figur 9 enthält eine Walze 82 mit den Schrumpfbereichen der Warenbahn zugeordneten konischen Abschnitten 84. Die Walze ist mit einer entsprechend dem aus der Warenbahn auszuschneidenden Muster geformten Schneide 86 versehen. Die Warenbahn wird mittels erhitzter Anpresswalzen 88 gegen die Schneide 86 gepresst. Die Vorrichtung gemäss Figur 10 enthält eine Walze 90 mit seitlichen konischen Abschnitten 92, auf der die Warenbahn aufliegt. Als Schneidelemente dienen beheizte Walzen 94 mit umlaufenden Schneiden 96, die gegen die Walze 90 gepresst und entsprechend dem zu schneidenden Muster elektronisch gesteuert seitlich verschoben werden.

Es sind noch weitere Ausführungsbeispiele möglich. Insbesondere ist es möglich, die Warenbahn ausschliesslich oder zusätzlich in Schussrichtung zu Schrumpfen. Hierzu müssten einerseits die Schussfäden und andererseits die Webbedingungen, insbesondere die Kettfadendichte so eingestellt sein, dass ein Schrumpfen in Schussrichtung möglich ist. Dabei kann das Gaskissen auch quer zur Längsrichtung der Warenbahn, d.h. quer zur Kettfadenrichtung ausgerichtet sein. Das Schrumpfen erfolgt dann über eine gerade zylindrische temperierte Walze.

### BEZUGSZEICHENLISTE

- K: Kettfaden
- S: Schussfaden
- 2: Gaskissen
- 2a: Gaskissen
- 4: Gewebezuschnitt, oberer
- 4a: Gewebezuschnitt, oberer
- 6: Gewebezuschnitt, unterer
- 6a: Gewebezuschnitt, unterer
- 8: Nahtstreifen
- 8a: Nahtstreifen
- 10: Oeffnung
- 12: Seitenbereich
- 14: Seitenbereich
- 16: Mittelbereich
- 18: Mittelachse
- 20: Bereich
- 22: Abnäher
- 24: Abnäher
- 26: Einbuchtung
- 28: Stützfaden
- 30: Einschnürung
- 32: Einschnürung
- 34: Warenbahn
- 36: Gewebebahn, obere
- 38: Gewebebahn, untere
- 40: Nahtstreifen
- 42: kissenförmiger Abschnitt
- 44: Mittelbereich
- 46₁: Seitenbereich
- 46₂: Seitenbereich
- 46₃: Seitenbereich
- 48: Mittelachse
- 50: Bereich
- 52: Aussparung
- 54: temperierte Walze
- 56: konischer Abschnitt
- 58: konischer Abschnitt
- 60: Webstelle
- 62: Abzugsvorrichtung
- 64: Abzugswalze
- 66: Umlenkwalze
- 68: Abnahmewalze
- 70: Warenbaum
- 72: konischer Abschnitt
- 74: Infrarotstrahler
- 76: Infrarotstrahler
- 78: Heissluftdüse
- 80: Heissluftdüse
- 82: Walze
- 84: konischer Abschnitt
- 86: Schneide
- 88: erhitzte Anpresswalze
- 90: Walze
- 92: konischer Abschnitt
- 94: Walze
- 96: Schneide

## Patentansprüche

1. Gaskissen, insbesondere für Sicherheitssysteme von Kraftfahrzeugen, aus zwei übereinander liegenden Gewebezuschnitten (4,4a,6,6a,36,38), die längs ihres Umfanges durch gegenseitiges Verweben eines Nahtstreifens (8,8a,40) miteinander verbunden sind, dadurch gekennzeichnet, dass mindestens die in einer Fadenrichtung ausgerichteten Seitenbereiche (12,14,46₁,46₂,46₃) zur Erhaltung der bauchigen Form geschrumpft sind.

2. Gaskissen nach Anspruch 1, dadurch gekennzeichnet, dass die Schrumpfung bis zum Mittelbereich (16,44) des Gaskissens abnimmt.

3. Gaskissen nach Anspruch 1, dadurch gekennzeichnet, dass es zwischen den Seitenbereichen (12,14,46₁,46₂,46₃) mindestens einen weiteren längs der Mittelachse (18,48) liegenden Schrumpfbereich (20,50) aufweist.

4. Gaskissen nach einem der Ansprüche 1 bis 3, dadurch gekennzeichnet, dass es vorzugsweise im Mittelbereich (16) die Gewebezuschnitte (4a,6a) verbindende eingewebte Stützfäden (28) aufweist, die stärker sind als die Fäden des übrigen Gewebes.

5. Gaskissen nach einem der Ansprüche 1 bis 4, dadurch gekennzeichnet, dass in den geschrumpften Seitenbereichen (12,14,46₁,46₂,46₃) zusätzlich mindestens ein Abnäher (22) angeordnet ist.

6. Gaskissen nach einem der Ansprüche 1 bis 5, dadurch gekennzeichnet, dass der gewebte Nahtstreifen (8,8a,40) mindestens Abschnittweise geschrumpft ist.

7. Gaskissen nach einem der Ansprüche 1 bis 6, dadurch gekennzeichnet, dass der obere Gewebezuschnitt (4,4a) eine dichtere Bindung als der untere Gewebezuschnitt (6,6a) aufweist, wobei der untere Gewebezuschnitt vorzugsweise mindestens einzelne dünnere und/oder weniger Schussfäden als der obere Gewebezuschnitt enthält.

8. Gaskissen nach einem der Ansprüche 1 bis 7, dadurch gekennzeichnet, dass die Kanten der zusammengewebten Gewebezuschnitte (4,4a,6,6a) durch thermisches Schmelzschneiden gebildet sind.

9. Verfahren zur Herstellung eines Gaskissens nach einem der Ansprüche 1 bis 8, wobei eine Warenbahn (34) aus zwei aus Schuss- (S) und Kettfäden (K) bestehenden Gewebebahnen (36,38) gleicher Breite unmittelbar übereinanderliegend in einem Verfahrensgang gewebt wird, wobei weiter Kett- und Schussfäden beider Gewebebahnen (36,38) an einem vorbestimmten Nahtstreifen (40) zur Bildung eines kissenförmigen Abschnittes (42) miteinander verwebt werden, dadurch gekennzeichnet, dass man Seitenbereiche (46₁,46₂, 46₃) der Warenbahn (34), die bis in den kissenförmigen Abschnitt (42) reichen so webt und/oder aus solchen Fäden bildet, dass diese Seitenbereiche (46₁,46₂,46₃) unter Wärmeeinwirkung schrumpfen, dass man weiter die zusammengewebten Gewebebahnen (36,38) durch Wärmeeinwirkung schrumpft und schliesslich den kissenförmigen Abschnitt (42) längs seines gewebten Nahtstreifens (40) aus der Warenbahn (34) ausschneidet.

10. Verfahren nach Anspruch 9, dadurch gekennzeichnet, dass man mindestens eine Gewebebahn (36,38) zusätzlich in einem mittleren Bereich (50) schrumpfbar ausbildet und schrumpft.

11. Verfahren nach Anspruch 9 oder 10, dadurch gekennzeichnet, dass man die Gewebebahnen (36,38) aus Fäden aus thermoplastischen synthetischen Kunststoffen herstellt.

12. Verfahren nach einem der Ansprüche 9 bis 11, dadurch gekennzeichnet, dass man die Gewebebahnen (36,38) im Schrumpfbereich (46₁,46₂,46₃,50) lockerer webt als im übrigen Bereich (44).

13. Verfahren nach einem der Ansprüche 9 bis 12, dadurch gekennzeichnet, dass man die Gewebebahnen (36,38) durch Ueberführen über mindestens eine temperierte Walze (54) schrumpft, die im Schrumpfbereich einen reduzierten Querschnitt, vorzugsweise konische Abschnitte aufweist.

14. Verfahren nach einem der Ansprüche 9 bis 12, dadurch gekennzeichnet, dass man die Gewebebahnen (36,38) im Schrumpfbereich (46₁,46₂,46₃,50) durch indirekte Wärmeeinwirkung, vorzugsweise mittels Heissluft und/oder Infrarotstrahlen schrumpft.

15. Verfahren nach einem der Ansprüche 9 bis 14, dadurch gekennzeichnet, dass man die obere Gewebebahn (36) dichter als die untere Gewebebahn (38) herstellt, wobei man vorzugsweise in der unteren Gewebebahn mindestens einzelne dünnere und/oder weniger Schussfäden verwendet.

16. Verfahren nach einem der Ansprüche 9 bis 15, dadurch gekennzeichnet, dass man im Mittelbereich (44) an mindestens einer Gewebebahn (4a,6a) mindestens einen stärkeren Stützfaden (28) miteinbindet und diesen periodisch flottierend mit der gegenüberliegenden Gewebebahn (4a,6a) verbindet.

17. Anlage zur Durchführung des Verfahrens nach einem der Ansprüche 9 bis 16, mit einer Webmaschine zum übereinanderliegenden Herstellen von zwei Gewebebahnen (36,38) und zum Zusammenweben der Gewebebahnen (36,38) längs eines vorgegebenen Nahtstreifens (8,8a,40), dadurch gekennzeichnet, dass sie eine Einrichtung (54,74,76,78,80) zum bereichsweisen Schrumpfen der Gewebebahnen (36,38) aufweist.

18. Anlage nach Anspruch 17, dadurch gekennzeichnet, dass sie eine einer Abzugswalze (64) nachgeordnete temperierte Walze (54) aufweist, die an den zu schrumpfenden Bereichen (46₁,46₂,46₃,50) jeweils einen reduzierten Querschnitt, vorzugsweise einen konischen Abschnitt (56,58) aufweist.

19. Anlage nach Anspruch 17 oder 18, dadurch gekennzeichnet, dass sie einen Infrarotstrahler (74) und/oder Heissluftdüsen (78,80) aufweist, die den zu schrumpfenden Bereichen (46₁,46₂,46₃,50) zugeordnet sind/ist.

20. Anlage nach einem der Ansprüche 17 bis 19, dadurch gekennzeichnet, dass sie zum Aufwickeln der Warenbahn (34) einen Warenbaum (70) aufweist, der an den geschrumpften Bereichen (46₁,46₂,46₃,50) jeweils einen reduzierten Querschnitt, vorzugsweise einen konischen Abschnitt (72) aufweist.

21. Anlage nach einem der Ansprüche 17 bis 19, dadurch gekennzeichnet, dass sie nach der Einrichtung zum Schrumpfen eine thermische Schneidvorrichtung aufweist, die vorzugsweise eine der Form der temperierten Walze entsprechende Walze (82,90) aufweist, mit der beheizte Schneiden (86,96) zusammenwirken (Figren 9 und 10).

## Claims

1. A gas cushion, more particularly for safety systems in motor vehicles, comprising two superimposed fabric sections (4, 4a, 6, 6a, 36, 38), which are connected to one another along their periphery by the reciprocal weaving of a seam strip (8, 8a, 40), characterised in that at least the lateral regions (12, 14, 46₁, 46₂, 46₃) aligned in one thread direction are shrunk in order to produce a bellied shape.

2. A gas cushion according to claim 1, characterised in that the shrinkage decreases towards the central region (16, 44) of the gas cushion.

3. A gas cushion according to claim 1, characterised in that it comprises at least one further shrinkage area (20, 50) lying along the central axis (18, 48) between the lateral regions (12, 14, 46₁, 46₂, 46₃).

4. A gas cushion according to one of claims 1 to 3, characterised in that it comprises inwoven reinforcing threads (28) connecting the fabric sections (4a, 6a) preferably in the central region, the reinforcing threads (28) being stronger than the threads of the remaining fabric.

5. A gas cushion according to one of claims 1 to 4, characterised in that at least one gusset (22) is additionally arranged in the shrunken lateral regions (12, 14, 46₁, 46₂, 46₃).

6. A gas cushion according to one of claims 1 to 5, characterised in that the woven seam strip (8, 8a, 40) is shrunk at least in sections.

7. A gas cushion according to one of claims 1 to 6, characterised in that the upper fabric section (4, 4a) has a closer weave than the lower fabric section (6, 6a), the lower fabric section preferably comprising at least individual thinner and/or fewer weft threads than the upper fabric section.

8. A gas cushion according to one of claims 1 to 7, characterised in that the edges of the woven-together fabric sections (4, 4a, 6, 6a) are formed by thermal fusion cutting.

9. A method for manufacturing a gas cushion according to one of claims 1 to 8, wherein a material web (34) comprising two fabric webs (36, 38) of equal width made of weft (S) and warp (K) threads are woven directly superimposed in a method step, further warp and weft threads of both fabric webs (36, 38) are woven together along predetermined seam strip (40) to form a cushion-shaped part (42), characterised in that lateral regions (46₁, 46₂, 46₃) of the material web (34), which extend into the cushion-shaped part (42), are woven in such a manner and/or are formed by such threads that the said lateral regions (46₁, 46₂, 46₃) shrink under the effect of heating, in that the woven-together fabric webs (36, 38) are further shrunk by the action of heat, and finally cushion-shaped part (42) is cut from the material web (34) along its woven seam strip (40).

10. A method according to claim 9, characterised in that at least one fabric web (36, 38) is constructed so as to be additionally shrinkable in its central region (50) and is shrunk.

11. A method according to claim 9 or 10, characterised in that the fabric webs (36, 38) are manufactured from threads of thermoplastic synthetic plastics material.

12. A method according to one of claims 9 to 11, characterised in that the fabric webs (36, 38) are more loosely woven in the shrinkage area (46₁, 46₂, 46₃, 50) than in the remaining area (44).

13. A method according to one of claims 9 to 12, characterised in that the fabric webs (36, 38) are shrunk by being guided over at least one heated roller (54), which in the shrinkage area has a reduced cross section, preferably conical sections.

14. A method according to one of claims 9 to 12, characterised in that the fabric webs (36, 38) are shrunk in the shrinkage area (46₁, 46₂, 46₃, 50) by indirect heating effect, preferably by means of hot air and/or infrared radiation.

15. A method according to one of claims 9 to 14, characterised in that the upper fabric web (36) is manufactured with a closer weave than the lower fabric web (38), at least individual thinner and/or fewer weft threads preferably being used in the lower fabric web.

16. A method according to one of claims 9 to 15, characterised in that at least one stronger reinforcing thread (28) is woven into the central region (44) of at least one fabric web (4a, 6a) and periodically connects the fabric web to the opposite fabric web (4a, 6a) in a floating manner.

17. Apparatus for carrying out the method according to one of claims 9 to 16, with a weaving machine for the manufacture of two superimposed fabric webs (36, 38) and for weaving together the fabric webs (36, 38) along a predetermined seam strip (8, 8a, 40), characterised in that the apparatus comprises a device (54, 74, 76, 78, 80) for shrinking the fabric webs (36, 38) in certain areas.

18. Apparatus according to claim 17, characterised in that it comprises a heated roller (54), which is arranged downstream of a doffing roller (64) and in the areas (46₁, 46₂, 46₃, 50) which are to be shrunk has a reduced cross section in each case, preferably a conical section (56, 58).

19. Apparatus according to claim 17 or 18, characterised in that it comprises an infrared radiator (74) and/or hot air nozzles (78, 80), which is/are associated with the areas (46₁, 46₂, 46₃, 50) which are to be shrunk.

20. Apparatus according to one of claims 17 to 19, characterised in that it comprises a cloth beam (70) for winding the material web (34), which cloth beam has a reduced cross section, preferably a conical section (72) in each of the areas (46₁, 46₂, 46₃, 50) which are to be shrunk.

21. Apparatus according to one of claims 17 to 19, characterised in that it comprises a thermal cutting device, which is arranged downstream of the shrinking device and preferably comprises a roller (82, 90), which has a shape corresponding to that of the heated roller and with which heated blades (86, 96) cooperate (Figs. 9 and 10).

## Revendications

1. Coussin à gaz notamment pour des systèmes de sécurité de véhicules automobiles comportant deux flans de tissu superposés (4, 4a, 6, 6a, 36, 38) reliés par tissage réciproque d'une bande de couture (8, 8a, 40), caractérisé en ce qu'au moins les zones latérales (12, 14, 46₁, 46₂, 46₃) alignées dans la direction du fil sont rétractées pour conserver une forme ventrue.

2. Coussin à gaz selon la revendication 1, caractérisé en ce que la rétraction diminue vers la zone médiane (16, 44) du coussin à gaz.

3. Coussin à gaz selon la revendication 1, caractérisé en ce qu'entre les zones latérales (12, 14, 46₁, 46₂, 46₃) il comporte au moins une zone de rétraction (20, 50) le long de l'axe médian (18, 48).

4. Coussin à gaz selon l'une des revendications 1 à 3, caractérisé en ce qu'il comporte de préférence dans la zone médiane (16) des fils d'appui (28) reliant les flans de tissu (4a, 6a) et qui sont plus résistants que les fils du restant du tissu.

5. Coussin à gaz selon l'une des revendications 1 à 4, caractérisé en ce que dans les zones latérales de rétraction (12, 14, 46₁, 46₂, 46₃) il y a en outre au moins un pli (22).

6. Coussin à gaz selon l'une des revendications 1 à 5, caractérisé en ce que la bande de couture tissée (8, 8a, 40) est rétractée au moins par segments.

7. Coussin à gaz selon l'une des revendications 1 à 6, caractérisé en ce que le flan de tissu supérieur (4, 4a) présente une liaison plus étroite que le flan de tissu inférieur (6, 6a), le flan de tissu inférieur ayant de préférence au moins différents fils de trame plus minces et/ou en nombre plus réduit que le flan de tissu supérieur.

8. Coussin à gaz selon l'une des revendications 1 à 7, caractérisé en ce que les arêtes des flans de tissu (4, 4a, 6, 6a) réunies par tissage sont formées par thermodécoupage.

9. Procédé de fabrication d'une coussin à gaz selon l'une des revendications 1 à 8, selon lequel on tisse une bande (34) à partir de bandes de tissu (36, 38) formées de fil de trame S et de fil de chaîne K, de largeur égale, directement superposées au cours d'une étape de procédé, et en outre des fils de chaîne et des fils de trame des deux bandes de tissu (36, 38) sont réunis par tissage suivant une bande de couture prédéterminée (40) pour former un segment (42) en forme de coussin, caractérisé en ce que l'on forme les zones latérales (46₁, 46₂, 46₃) de la bande de produit (34) qui arrive jusqu'au niveau des segments (42) en forme de coussin, en les tissant et/ou les formant avec des fils tels que ces bandes latérales (46₁, 46₂, 46₃) se rétractent sous l'effet de la chaleur et en ce qu'en outre on découpe les bandes de tissu réunies par tissage (36, 38) par thermodécoupage pour les rétracter puis on découpe le segment en forme de coussin (42) le long de sa bande de couture (40) tissée dans la bande de matière (34).

10. Procédé selon la revendication 9, caractérisé en ce qu'on réalise au moins une bande de tissu (36, 38) de manière rétractable dans sa zone centrale (50) et on la fait rétracter.

11. Procédé selon la revendication 9 ou 10, caractérisé en ce qu'on fabrique les bandes tissées (36, 38) à partir de fils de matière plastique synthétique thermoplastique.

12. Procédé selon l'une des revendications 9 à 11, caractérisé en ce qu'on tisse de manière lâche les bandes de tissu (36, 38) dans la zone de rétraction (46₁, 46₂, 46₃, 50) d'une manière plus lâche que dans les parties restantes (44).

13. Procédé selon l'une des revendications 9 à 12, caractérisé en ce qu'on rétracte les bandes de tissu (36, 38) en les faisant passer sur au moins un cylindre (54) mis à la température, et en ce que la zone de rétraction présente une section réduite, notamment des segments coniques.

14. Procédé selon l'une des revendications 9 à 12, caractérisé en ce qu'on fait rétracter les bandes tissées (36, 38) dans la zone de rétraction (46₁, 46₂, 46₃) par action indirecte de la chaleur de préférence avec de l'air chaud et/ou un rayonnement infrarouge.

15. Procédé selon l'une des revendications 9 à 14, caractérisé en ce qu'on réalise la bande tissée supérieure (36) plus dense que la bande tissée inférieure (38) et de préférence dans la bande tissée inférieure, on utilise au moins des fils de trame plus minces et/ou en nombre plus réduit.

16. Procédé selon l'une des revendications 9 à 15, caractérisé en ce que dans la zone médiane (44) d'au moins une bande tissée (4a, 6a), la liaison se fait par au moins un fil d'appui (28) plus fort et celui-ci est relié de manière flottante par rapport au restant de la bande tissée (4a, 6a).

17. Installation pour la mise en oeuvre du procédé selon une des revendications 9 à 16 avec une machine à tisser pour réaliser de manière superposée deux bandes de tissu (36, 38) et pour réunir par tissage les bandes tissées (36, 38) le long d'une bande de couture prédéterminée (8, 8a, 40), installation caractérisée en ce qu'elle comporte une installation (54, 74, 76, 78, 80) pour rétracter par zones, les bandes de tissu (36, 38).

18. Installation selon la revendication 17, caractérisée en ce qu'elle comporte un cylindre (54) mis à la température en aval un cylindre extracteur (64), et qui présente au niveau des zones à rétracter (46₁, 46₂, 46₃, 50), chaque fois une section réduite de préférence un segment conique (56, 58).

19. Installation selon la revendication 17 ou 18, caractérisée en ce qu'elle comporte un élément radiant à infrarouges (74) et/ou des buses à air chaud (78, 80) associées aux zones (46₁, 46₂, 46₃, 50) à rétracter.

20. Installation selon l'une des revendications 17 à 19, caractérisée en ce que pour enrouler la bande de matière (34) elle comporte une ensouple (70) qui présente dans les zones rétractées (46₁, 46₂, 46₃, 50), chaque fois une section réduite de préférence un segment conique (72).

21. Installation selon l'une des revendications 17 à 19, caractérisée en ce qu'en aval de l'installation de rétraction elle comporte un dispositif de thermodécoupe ayant de préférence un cylindre (82, 90) dont la forme correspond à celle du cylindre de mise en température et qui coopère avec les couteaux chauffés (86, 90) (figures 9 et 10).
